# EUROPÄISCHE PATENTSCHRIFT

(11) **EP 2 604 378 B1**
(45) Veröffentlichungstag und Bekanntmachung des Hinweises auf die Patenterteilung: **01.04.2015**
(21) Anmeldenummer: 11193809.8
(22) Anmeldetag: 15.12.2011
(51) Int. Cl.: B23K 26/38

(54) **Wiederöffnung von Kühlluftbohrungen mit Nanosekundenlaser im Mikrosekundenbereich**
Reopening of cooling holes with nanosecond laser in the microsecond range
Réouverture d'ouvertures pour air de refroidissement à l'aide d'un laser à nanosecondes dans le domaine des microsecondes

(43) Veröffentlichungstag der Anmeldung: 19.06.2013
(73) Patentinhaber: Siemens Aktiengesellschaft, 80333 München (DE)
(72) Erfinder: Massa, Andrea, 12157 Berlin (DE); Wollnik, Adrian, 13585 Berlin (DE); Wilkenhöner, Rolf, 14532 Kleinmachnow (DE)

(56) Entgegenhaltungen:
- DE-A1- 10 063 309
- US-A1- 2007 241 084
- US-A1- 2008 085 395
- US-A1- 2008 197 120

## Beschreibung

Die Erfindung betrifft das Wiederöffnen von Durchgangsbohrungen, die beim Beschichten zumindest teilweise verstopft wurden mittels eines Nanosekundenlaser im Mikrosekundenbereich.

Hochtemperaturbauteile, wie z.B. Turbinenschaufeln werden aktiv gekühlt und weisen daher zylindrische und/oder geformte Kühlluftlöcher mit einem Diffusor an der Oberfläche auf.

Spätestens beim Wiederverwenden solcher Turbinenschaufeln, bei denen die Turbinenschaufel entschichtet und neu beschichtet werden, kann es teilweise zum Verstopfen von den bereits vorhandenen Kühlluftbohrungen können.

Diese Beschichtung im Loch und im Diffusor (Coat down) muss entfernt werden.

Dies wird häufig mittels einer speziellen EDM-Elektrode durchgeführt.

Die US 2008/0197120 A1 offenbart ein Verfahren zur Herstellung von Kühllöchern, bei dem kürzere und längere Pulslängen verwendet werden, wobei für die kürzeren Pulslängen eine Laserleistung von 300W benutzt wird und die Pulslänge der längeren Pulslänge bei >500ns bis 10ms liegt.

Die US 2008/0085395 A1 offenbart ein Verfahren zur Reparatur eines Kühllochs, bei dem die Beschichtung auf dem Diffusor nicht vollständig entfernt wird.

Es soll ein Verfahren aufgezeigt werden, welches das Verfahren schneller durchführen lässt.

Die Aufgabe wird gelöst durch ein Verfahren gemäß Anspruch 1.

In den Unteransprüchen sind weitere vorteilhafte Maßnahmen aufgelistet, die beliebig miteinander kombiniert werden können, um weitere Vorteile zu erzielen.

Es zeigen:
- Figur 1: ein Kühlluftloch mit einer Verstopfung,
- Figur 2: eine Turbinenschaufel,

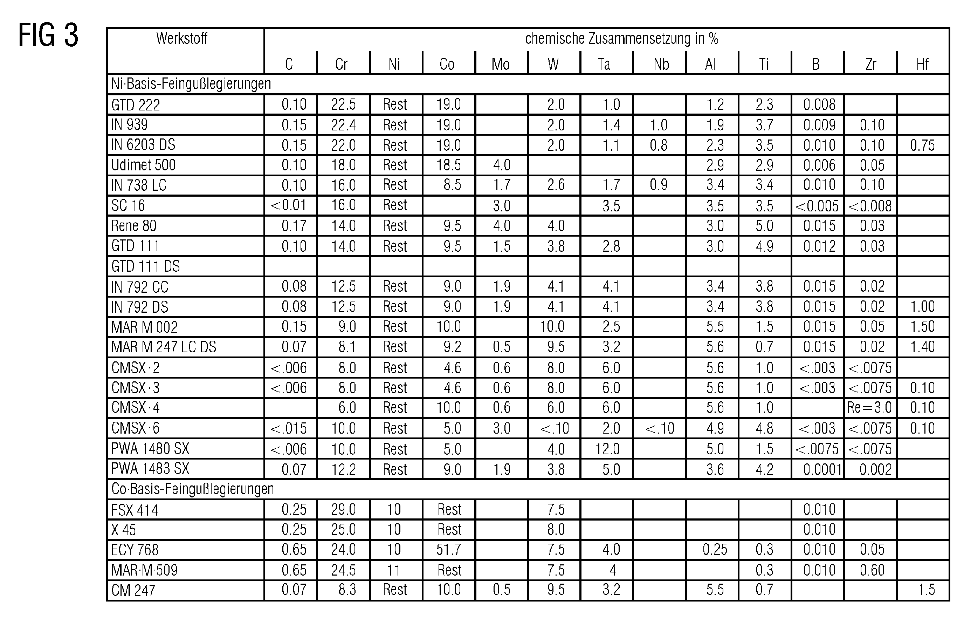

- Figur 3: eine Liste von Superlegierungen.

Die Beschreibung und die Figuren stellen nur Ausführungsbeispiele der Erfindung dar.

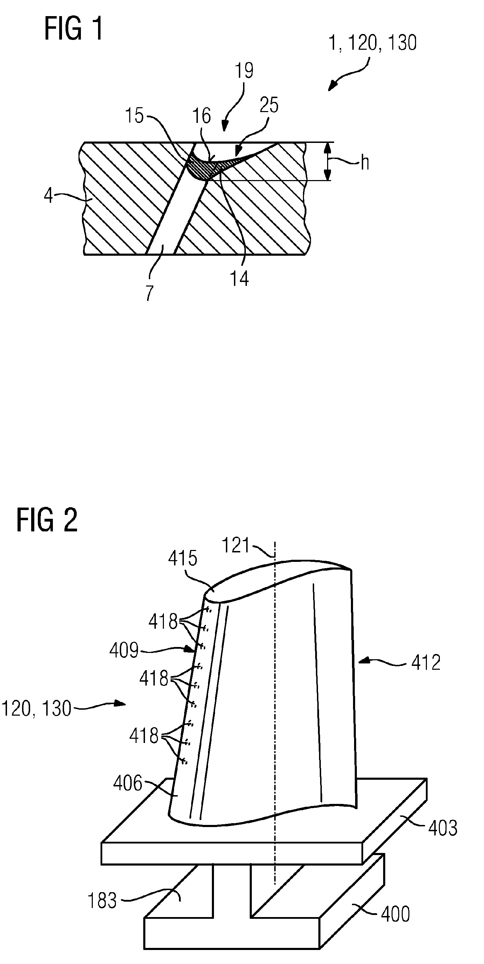

Figur 1 zeigt ein Bauteil 1, 120, 130 mit einem Kühlluftloch 19, das auf einem zylindrischen Anteil 7 besteht (nicht dargestellt), wobei bei manchen Kühlluftlöchern 19 ab einer Tiefe h noch ein Diffusor 25 im Bereich der Oberfläche vorhanden ist, der 25 eine deutliche Verbreiterung des zylindrischen Anteils 7 darstellt.

Die Erfindung bezieht sich auf vollständig zylindrische Bohrungen 7 und zylindrische Bohrungen 7 mit einem Diffusor 25 (shapes).

Gezeigt ist ein Coat Down 15 in dem zylindrischen Teil 7 und Coat Down 14 im Diffusor 25 des Loch 19, also Beschichtungsmaterial in einem bereits vorhandenen Loch 19.

Die Verstopfung des Lochs 19 kann vollständig sein (siehe Fig. 1) oder nur teilweise wie eine Verengung des Querschnitts (nicht dargestellt).

Ebenso nur exemplarisch ist die Tiefe des Coat Downs 15 bis zur Tiefe h dargestellt. Sie kann darüber oder darunter liegen.

Vorzugsweise wird ein Ablationslaser verwendet.

Vorzugsweise ist dies ein Nanosekundenlaser, d.h. das ist ein Laser, der Pulslängen in Nanosekundenbereich (≤≤ 500ns) realisieren kann.

Die Leistung des Lasers liegt bei 180W - 200W, wobei aber eine Pulsdauer von 1µs - 20µs, insbesondere 5µs - 20µs, ganz insbesondere 10µs verwendet wird.

Die Frequenz liegt in dem Bereich von 20kHz - 40kHz, insbesondere 30kHz.

Der Laserstrahl (oder allgemein energiereiche Strahl, nicht dargestellt), wird über die Oberfläche 16 des Coat Downs 14, 15 verfahren, wobei eine Vorschubgeschwindigkeit von 200mm/s - 300mm/s, ganz vorzugsweise 250mm/s verwendet wird.

Der abzutragende Bereich 14, 15 wird schichtweise abgetragen. Dies gilt für den Coat Down 15 im zylindrischen Anteil 7 und den Coat Down 14 im Diffusor 25.

Dabei wird vorzugsweise auch die Fokuslage von abgetragener Schicht zu abzutragende Schicht verschoben.

Ist ein Diffusor 25 vorhanden, so wird der Coat Down 14 im Diffusor 25 erst anschließend daraus entfernt.

Dies erfolgt dann durch einen Nanosekundenlaser, wobei hier die gleichen Laser-Parameter, wie bei der Entfernung des Coat Downs 15 aus dem zylindrischen Anteils 7 verwendet werden.

Ebenso vorzugsweise können Pulszeiten kleiner 800ns, insbesondere kleiner 600ns für den Coat Down 14 im Diffusor 25 verwendet werden. Die Mindestpulszeit liegt dann bei 100ns für den Abtrag von Material 14 aus dem Diffusor 25.

Es werden entweder keramischer Coat Down 14 ,15 oder metallischer Coat Down 14, 15 oder keramischer Coat Down 14, 15 entfernt, der auf metallischen Coat Down 14, 15 angeordnet ist. Somit besteht der besondere Vorteil beim Wiederöffnen von Shapes darin, dass mit einem Laser, hier einem Nanosekundenlaser, wie er bei der Neuherstellung verwendet wird, ein Shape wiedergeöffnet werden kann, ohne dass der Laser oder eine Laserapparatur oder eine zweite Laserapparatur verwendet werden muss.

Die Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAIX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10A1-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10A1-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAIX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAIX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Verfahren zum Wiederöffnen von Kühlluftlöchern (19) mittels eines Lasers zur Entfernung von Beschichtung (14, 15) im zylindrischen Teil (7) und im Diffusor (25),
die zumindest teilweise die Kühlluftlöcher (19) verstopft, bei dem ein Nanosekundenlaser verwendet wird und zur Entfernung der Beschichtung im zylindrischen Teil Pulszeiten von 1µs - 20µs, verwendet werden,
bei dem der Laser mit einer Laserleistung von 180W - 200W verwendet wird,
**dadurch gekennzeichnet, dass**
der Laser mit einer Vorschubgeschwindigkeit zwischen 200mm/s- und 300mm/s über die abzutragende Oberfläche (16) verfahren wird
und bei dem eine Puls-Frequenz von 20kHz - 40kHz verwendet wird.

2. Verfahren nach Anspruch 1,
wobei zuerst ein zylindrischer Teil (7) von Beschichtung (15) und
dann der Diffusorbereich (25) von Beschichtung (14) beseitigt wird.

3. Verfahren nach Anspruch 2,
bei dem für die Entfernung der Beschichtung (14) aus dem Diffusorbereich (25) ein Nanosekundenlaser verwendet wird und Pulszeiten kleiner 800ns, insbesondere kleiner 600ns, verwendet werden.

4. Verfahren nach Anspruch 2,
bei dem für die Entfernung der Beschichtung (14) aus dem Diffusorbereich (25) ein Nanosekundenlaser verwendet wird und vorzugsweise gleiche Laserparameter wie bei der Entfernung der Beschichtung (15) aus dem zylindrischen Teils (7) verwendet werden.

5. Verfahren nach einem der vorherigen Ansprüche,
bei dem die Beschichtung (14, 15), die zumindest teilweise die Kühlluftlöcher verstopft, schichtweise abgetragen wird.

6. Verfahren nach einem der vorherigen Ansprüche,
bei dem metallische und/oder keramische Beschichtung (14, 15), die zumindest teilweise die Kühlluftlöcher verstopft, entfernt wird.

## Claims

1. Process for reopening cooling-air holes (19) by means of a laser to remove coating (14, 15) in the cylindrical part (7) and in the diffuser (25) which at least partially blocks the cooling-air holes (19), in which process a nanosecond laser is used and pulse times of 1 µs - 20 µs are used to remove the coating in the cylindrical part,
in which process the laser is used with a laser power of 180 W - 200 W,
**characterized in that**
the laser is moved over the surface (16) to be removed at a feed rate of between 200 mm/s and 300 mm/s,
and in which a pulse frequency of 20 kHz - 40 kHz is used.

2. Process according to Claim 1,
wherein firstly a cylindrical part (7) is cleared away from the coating (15) and
then the diffuser region (25) is cleared away from the coating (14).

3. Process according to Claim 2,
in which a nanosecond laser is used and pulse times of less than 800 ns, in particular less than 600 ns, are used for the removal of the coating (14) from the diffuser region (25).

4. Process according to Claim 2,
in which a nanosecond laser is used and preferably the same laser parameters as for the removal of the coating (15) from the cylindrical part (7) are used for the removal of the coating (14) from the diffuser region (25).

5. Process according to one of the preceding claims,
in which the coating (14, 15), which at least partially blocks the cooling-air holes, is removed in layers.

6. Process according to one of the preceding claims,
in which metallic and/or ceramic coating (14, 15), which at least partially blocks the cooling-air holes, is removed.

## Revendications

1. Procédé de réouverture d'ouïes (19) d'air de refroidissement au moyen d'un laser pour éliminer des revêtements (14, 15) dans la partie (7) cylindrique et dans le diffuseur (25), qui bouchent au moins en partie les ouïes (19) d'air de refroidissement, dans lequel on utilise un laser à nanosecondes et dans lequel on utilise, pour l'élimination du revêtement dans la partie cylindrique, des durées d'impulsions de 1µs à 20µs,
dans lequel on utilise le laser à une puissance laser de 180W à 200W,
**caractérisé en ce que**
on déplace le laser sur la surface (16) à déblayer à une vitesse d'avance comprise entre 200mm/s et 300mm/s et dans lequel on utilise une fréquence des impulsions de 20kHz à 40kHz.

2. Procédé suivant la revendication 1,
dans lequel on débarrasse d'abord une partie (7) cylindrique du revêtement (15) et
on débarrasse ensuite du revêtement (14) la partie (25) de diffuseur.

3. Procédé suivant la revendication 2,
dans lequel, pour éliminer le revêtement (14) de la partie (25) de diffuseur, on utilise un laser à nanosecondes et on utilise des durées d'impulsions plus petites que 800ns, notamment plus petites que 600ns.

4. Procédé suivant la revendication 2,
dans lequel, pour éliminer le revêtement (14) de la partie (25) de diffuseur, on utilise un laser à nanosecondes et on utilise de préférence les mêmes paramètres laser que pour l'élimination du revêtement (15) de la partie (7) cylindrique.

5. Procédé suivant l'une des revendications précédentes,
dans lequel on déblaye couche par couche le revêtement (14, 15) qui bouche au moins en partie les ouïes d'air de refroidissement.

6. Procédé suivant l'une des revendications précédentes,
dans lequel on élimine un revêtement (14, 15) métallique et/ou céramique, qui bouche au moins en partie les ouïes d'air de refroidissement.
